Europäisches Patentamt

(19) European Patent Office

Office européen des brevets

(11) Numéro de publication: **0 211 727**
**B1**

(12) **FASCICULE DE BREVET EUROPEEN**

(45) Date de publication du fascicule du brevet: **24.10.90**

(51) Int. Cl.⁵: **G 06 K 11/06**

(21) Numéro de dépôt: **86401534.2**

(22) Date de dépôt: **09.07.86**

(54) Dispositif de saisie informatique de données graphiques.

(30) Priorité: **09.07.85 FR 8510508**

(43) Date de publication de la demande:
**25.02.87 Bulletin 87/09**

(45) Mention de la délivrance du brevet:
**24.10.90 Bulletin 90/43**

(84) Etats contractants désignés:
**AT BE CH DE FR GB IT LI LU NL SE**

(56) Documents cités:
**EP-A-0 134 539**
**FR-A-1 597 348**
**FR-A-2 248 558**
**FR-A-2 463 555**
**GB-A-2 024 435**
**US-A-4 205 199**
**US-A-4 430 526**

**IBM TECHNICAL DISCLOSURE BULLETIN, vol. 3,
no. 6, novembre 1960, page 22, New York, US;
K.A. AHMAD: "Signal communication
apparatus"**

(73) Titulaire: **Farel, Alain**
**2, allée des Coquelicots**
**F-78630 Orgeval (FR)**

(72) Inventeur: **Farel, Alain**
**2, allée des Coquelicots**
**F-78630 Orgeval (FR)**
Inventeur: **Agobian, Manuel**
**4, rue Gelinotte**
**F-77135 Pontcarre (FR)**
Inventeur: **Le, Sinh**
**39, rue de Vincennes**
**F-94700 Maisons Alfort (FR)**

(74) Mandataire: **Joly, Jean-Jacques et al**
**CABINET BEAU DE LOMENIE 55, rue
d'Amsterdam**
**F-75008 Paris (FR)**

(56) Documents cités:

**PATENTS ABSTRACTS OF JAPAN, vol. 4, no.
153 (P-33)635r, 25 octobre 1980, page 7 P 33; &
JP-A-55 99 683 (DAINI SEIKOSHA K.K.) 29-07-
1980**

Courier Press, Leamington Spa, England.

EP 0 211 727 B1

# Description

La présente invention a pour objet un dispositif permettant la saisie informatique de données graphiques, et plus particulièrement un dispositif du type comportant: une table à dessiner dans laquelle est incorporée une grille formée d'un premier ensemble de conducteurs disposés en lignes et d'un deuxième ensemble de condcteurs disposés en colonnes, au moins un style muni de moyens pour engendrer un champ magnétique et de moyens d'alimentation électrique permettant de faire fonctionner le style de façon autonome, et des circuits de détection et de calcul relié aux conducteurs de la grille pour recevoir les signaux induits dans les conducteurs par le champ magnétique engendré et élaborer une information de position représentative de la position du style par rapport à la table à dessiner. Un dispositif de ce type est décrit dans "IBM Technical Disclosure Bulletin", vol. 3, No 6, novembre 1960, page 22.

Le domaine d'application de l'invention est celui des dispositifs permettant de convertir sous forme numérique et d'enregistrer des informations graphiques, telles que des dessins, au moment de leur création.

Les dispositifs connus permettant d'effecteur la saisie de données graphiques au moment de la création de celles-ci utilisent des photostyles, des stylets électrostatiques ou électromagnétiques à solénoïdes ou encore des souris travaillant sur des tables à numériser sans laisser de trace graphique sur un support quelconque. Le document US—A—4 430 526 décrit par exemple un photostyle comprenant les fonctions d'écriture, d'effacement et de mise en valeur permettant de modifier une image dans le cadre d'une téléconférence.

L'utilisateur ne peut donc laisser libre cours à sa créativité, dans la mesure où son mode de travail est gêné par l'écart existant entre l'entrée des données par le biais de la table à numériser et la trace visible du graphisme sortie sur l'écran ou sur une table traçante. Il est en outre difficile de travailler avec un objet du type souris que ne correspond pas à la forme des outils habituels de dessin.

La présente invention a pour but de fournir un dispositif permettant la saisie informatique de données graphiques, tout en laissant le dessinateur dans les conditions habituelles de son activité, notamment en lui offrant la possibilité d'effecteur des tracés visibles ou des effacements effectifs tout en enregistrant ou en effaçant les données numériques correspondantes dans une mémoire d'un ordinateur.

Ce but est atteint au moyen d'un dispositif du type défini en tête de la présente description dans lequel, conformément à l'invention:

le ou chaque style comprend: au moins organe d'écriture et d'effacement pour réaliser de façon sélective des tracés visibles et des effacements desdits tracés visibles sur la table à dessiner, des moyens pour engendrer un champ magnétique alternatif ayant une caractéristique différente prédéterminée correspondant à l'une des fonctions de tracé ou d'effacement pouvant être réalisées au moyen du style, la caractéristique du champ magnétique engendré étant déterminée selon la fonction de tracé ou d'effacement sélectionnée et lesdits moyens pour engendrer un champ magnétique alternatif étant actionnés par lesdits organes d'écriture et d'effacement (33, 43), et

les circuits de détection et de calcul comprennent des moyens de discrimination pour distinguer, à partir des signaux recueillis sur les conducteurs de la grille, entre lesdits champs magnétiques différents, de manière à associer à l'information de position une information représentative de la fonction de tracé ou d'effacement sélectionnée.

Les caractéristiques différentes des champs magnétiques engendrés peuvent être leurs amplitudes et/ou fréquences, ce qui se traduit dans les conducteurs de la grille, par des courants induits d'intensité différentes. Les moyens de traitement sont alors agencés de manière à détecteur l'amplitude maximale des signaux recueillis sur les conducteurs de la grille et à comparer ladite amplitude maximale à des valeurs prédéterminées définissant des plages d'amplitude différentes correspondant chacune à une amplitude ou fréquence particulière du champ magnétique, de manière à délivrer ladite information représentative de la fonction de tracé ou d'effacement sélectionnée.

Selon une particularité du dispositif de saisie conforme à l'invention, le ou chaque style comprend au moins un organe d'écriture ou d'effacement rétractable coopérant avec un contact pour commander la génération d'un champ magnétique par fermeture du contact sous l'effet de la pression de l'organe d'écriture ou d'effacement sur la table à dessiner.

D'autres particularités et avantages du dispositif conforme à l'invention ressortiront à la lecture de la description faite ci-après, à titre indicatif mais non limitatif, en référence aux dessins annexés sur lesquels:

la figure 1 est un schéma éclaté d'un mode de réalisation d'une table à dessiner d'un dispositif de saisie conforme à l'invention,

la figure 2 est une vue très schématique d'un mode de réalisation d'un style utilisable avec la table de la figure 1,

la figure 3 est un schéma des circuits contenus dans le style de la figure 2,

la figure 4 est un schéma des circuits contenus dans la table du dispositif de saisie, et

la figure 5 est un organigramme montrant des opérations effectuées au cours du traitement des signaux recueillis sur les conducteurs de la grille de la table du dispositif de saisi.

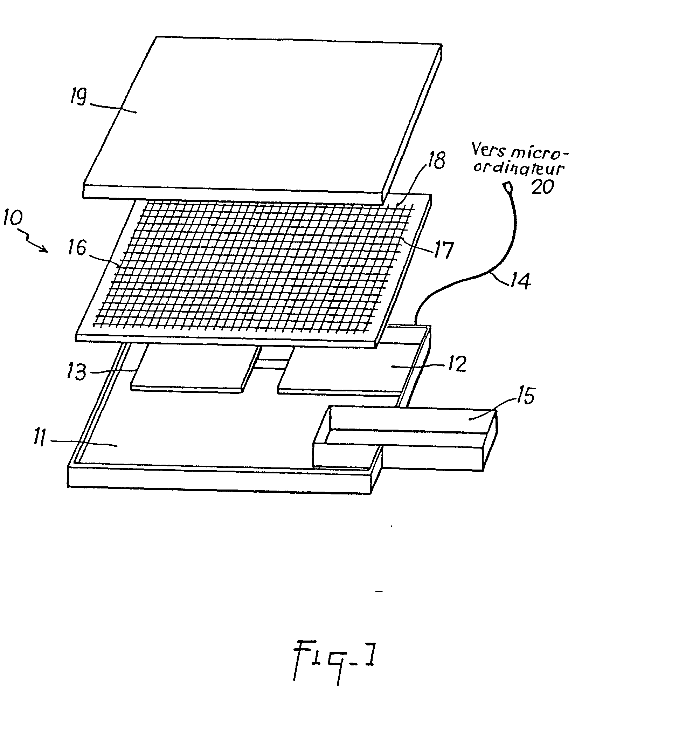

La table à dessiner 10 illustrée par la figure 1 comprend un socle 11 d'inclinaison réglable sur lequel est disposée une grille de numérisation 16 elle-même recouverte d'une feuille ou plaque de revêtement 19.

Le socle 11 enferme des circuits électroniques 12 destinés aux traitements de signaux recueillis de la grille de numérisation et un circuit d'alimentation électrique 13. Une liaison 14 permet la connexion des circuits 12 à un micro-ordinateur 20 auquel peuvent être transférées les données graphiques numérisées. La connexion entre la table 10 et le micro-ordinateur 20 est réalisée par tout type de liaison connu, par exemple par liaison de type parallèle ou série sur un conducteur ou par liaison optique ou sonore. Le socle 11 comprend encore un tiroir 15 dans lequel peuvent être rangés différents styles.

La grille 16 est formée de façon connue par un réseau à mailles carrées de conducteurs rectilignes 17 parallèles les uns aux autres et disposés en lignes et des conducteurs 18 parallèles les uns aux autres et disposés en colonnes. Le nombre de conducteurs en lignes et de conducteurs en colonnes est par exemple égal à 64. Les conducteurs 17, 18 sont reliés individuellement aux circuits 12 par des connexions souples (non représentées).

Le revêtement 19 est en un matériau perméable aux champs magnétiques, par exemple en une matière plastique. Sa face supéieure est utilisée comme support de tracé, ou pour la fixation d'un support tel que papier, calque, film plastique ou autre.

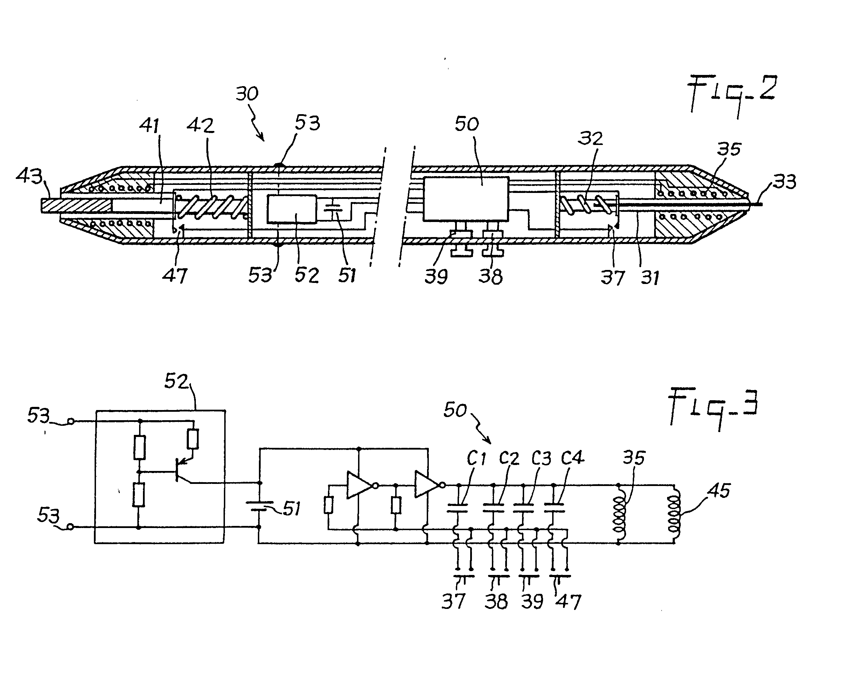

Le tracé de graphismes sur le revêtement 19 est réalisé au moyen d'un style tel que celui 30 de la figure 2.

A une première extrémité, le style 30 comprend un organe d'écriture tel qu'un stylo à encre ou, comme dans l'exemple illustré, un porte-mine 31. Le porte-mine 31 est rétractable à l'encontre de la force de rappel exercée par un ressort 32. De façon classique, le porte-mine 31 peut être associé à des moyens d'avance de la mine 33 au fur et à mesure de l'usure de celle-ci.

A sa première extrémité, le style 30 comprend encore une bobine d'induction 35 qui entoure la mine 33 et qui est reliée à un circuit oscillateur 50. Un interrupteur 37 a un contact mobile fixé au porte-mine 31 et un contact fixe porté par le corps du style 30. Lors de l'utilisation du style en mode écriture sur la table 10 au moyen de la mine 33, la pression exercé sur la point de la mine pendant l'écriture ferme l'interrupteur 37 à l'encontre de la force de rappel exercée par le ressort 32. Comme indiqué plus loin, l'interrupteur 37 est inséré dans le circuit de l'oscillateur 50 de sorte que la fermeture de l'interrupteur 37 commande le fonctionnement de l'oscillateur à une fréquence correspondant à une fonction d'écriture.

Un ou plusieurs autres interrupteurs, ici au nombre de deux, 38, 39 sont insérés dans le circuit de l'oscillateur et peuvent être actionés manuellement au moyen de boutons de commande portés par le corps du style 30. L'actionnement de l'un et/ou l'autre des interrupteurs 38, 39 permet du modifier la fréquence de l'oscillateur en fonction d'un mode particulier d'écriture choisi, par exemple en fonction d'une couleur ou d'un graphisme particulier (traits d'épaisseurs différentes, ou tirets, on pointillés par exemple).

Des repères de couleurs ou de graphismes correspondants sont alors formés sur les boutons de manoeuvre des interrupteurs ou sur le corps du style en regard des boutons de manoeuvre. Les interrupteurs peuvent en variante être commandés par un organe de manoeuvre unique à plusieurs positions correspondant à différents repères formés sur le corps du style.

La sélection d'une couleur d'écriture au moyen des interrupteurs 38, 39 peut être effectuée avec le changement de l'organe d'écriture afin de reproduire sur la table à dessiner un tracé visible correspondant exactement aux données numérisées. A cet effet, la mine 33 du porte-mine 31 peut être changée.

A son autre extrémité, le style 30 comprend un organe d'effacement tel qu'un porte-gomme 41 rétractable à l'encontre d'un ressort 42. Une bobine d'induction 45 entoure la gomme 43 et est relié à l'oscillateur 50. Un interrupteur 47 a un contact mobile fixé au porte-gomme 41 et un contact fixé porté par le corps du style 30. Lors de l'utilisation du style 30 en mode effacement d'un tracé sur la table 10 au moyen de la gomme 43, la pression exercée sur la gomme pendant l'effacement ferme l'interrupteur 47 à l'encontre de la force de rappel exercée par le ressort 42. L'interrupteur 47 est inséré dans le circuit de l'oscillateur 50 de sorte que la fermeture de l'interrupteur 47 commande le fonctionnement à une fréquence correspondant à la fonction d'effacement.

L'alimentation électrique de l'oscillateur est assurée par une batterie rechargeable 51 par exemple une batterie Ni-Cd. Celle-ci est reliée à un circuit de charge 52 qui peut être connecté à une source d'alimentation extérieure au moyen de bornes 53 prévues sur le corps du style. De la sorte, le style 30 peut fonctionner de façon totalement autonome, sans liaison physique avec une source d'alimentation extérieure ou avec la table 10.

Les circuits électriques contenus dans le style 30 sont représentés sur la figure 3.

Le circuit oscillateur 50 comprend plusieurs condensateurs différents C1 à C4 qui sont mis en circuit par fermeture des interrupteurs 37, 38, 39 et 47. Le champ magnétique produit par la bobine 35 ou la bobine 45 a ainsi une fréquence qui dépend du mode de fonctionnement sélectionné par la fermeture de l'un et/ou l'autre des interrupteurs.

On a envisagé ci-avant le cas d'un style unique regroupant différentes fonctions d'écriture et d'effacement. Il est bien entendu possible d'utiliser plusieurs styles multi-fonctions, ou même plusieurs styles monofunctionnels. Dans ce dernier cas, chaque style est muni d'un organe d'écriture ou d'effacement particulier et comprend un circuit oscillateur fonctionnant à une fréquence différente de celle des oscillateurs des autres styles. La génération du champ magnétique est commandée par fermeture d'un contact provoquée par la pression exercée sur la table par l'organe d'écriture ou d'effacement.

Par rapport aux tables à numériser connues, la table 10 se distingue, d'une part en ce qu'elle permet une écriture ou un effacement effectif des données graphiques et, d'autre part, en ce qu'en plus de l'information de position donnant les coordonnées de la position instantanée du style par rapport à la grille, est élaborée une information représentative de la fonction de tracé ou d'effacement sélectionnée par l'utilisateur. Cette information de fonction est déterminée par identification de la fréquence du champ magnétique produit par le style à partir des signaux recueillis sur les conducteurs de la grille.

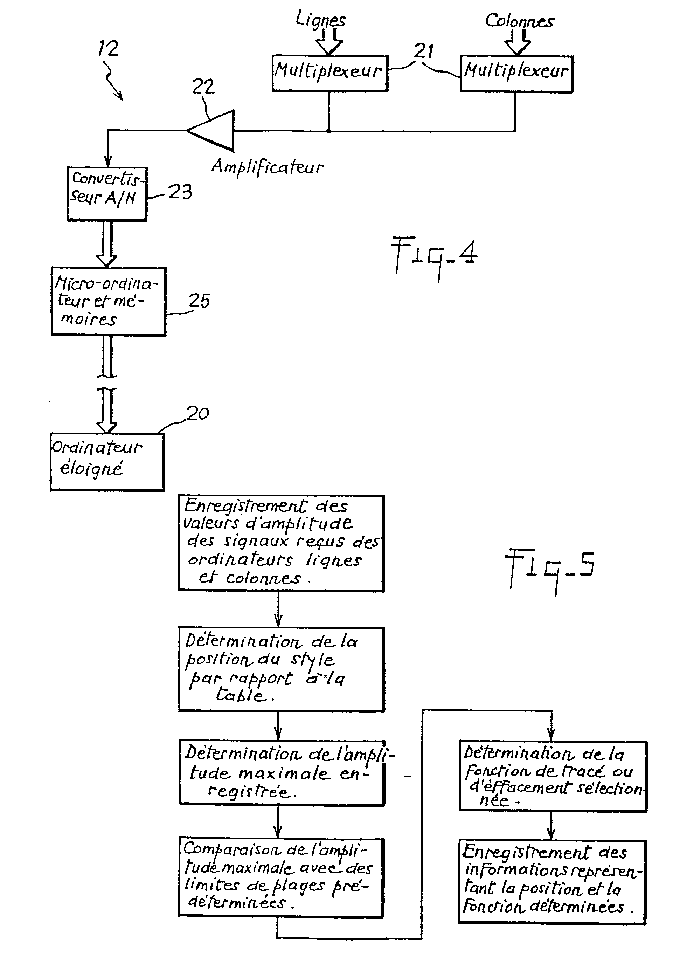

La figure 4, illustre schématiquement les circuits électroniques 12 que contient la table 10. Les conducteurs 17, 18 sont sélectionnés séquentiellement au moyen de multiplexeurs analogiques 21 dont les signaux de sortie sont amplifiés par des amplificateurs 22. Les signaux amplifiés sont convertis sous forme numérique au moyen d'un circuit convertisseur analogique-numérique 23 et les signaux numériques obtenus sont stockés dans des mémoires vives d'un micro-ordinateur 25 au moyen duquel est effectué le traitement des signaux. Les différentes étapes de ce traitement sont illustrées par l'organigramme de la figure 5.

L'information de position du style 30 est déterminée par détection du maximum de courant recueilli sur les conducteurs lignes et les conducteurs colonnes, et conversion de ce maximum en valeurs de coordonnées. Une description détaillée de la détermination de l'information de position n'est pas nécessaire ici puisqu'elle ne se distingue pas des procédés utilisés classiquement avec les tables à numériser.

Selon l'invention, le traitement des signaux recueilli comprend en outre la détermination d'une information représentant la fonction de tracé ou d'effacement sélectionnée. Cette détermination est tout simplement effectuée en comparant le maximum de courant recueilli à différentes valeurs prédéterminées définissant des plages d'amplitude différentes qui correspondent chacune à une fréquence particulière du champ magnétique. En effet, la génération de champs magnétiques de fréquences différentes se traduit par la production de courants d'amplitudes différentes. La détection de l'amplitude du courant maximum recueilli et sa comparaison auxdites valeurs prédéterminées permet donc d'identifier la fréquence du champ et, par là-même, la fonction de trace ou d'effacement sélectionnée.

Lorsque l'information de fonction est déterminée, elle est associée à l'information de position et les deux informations sont enregistrées dans les mémoires vives 24. Les informations enregistrées peuvent ensuite être transmises au micro-ordinateur 20 par la liaison 14 afin de libérer de l'espace mémoire dans les mémoires vives 24 en vue de la saisie de nouvelles données graphiques.

En variante, les informations de fonction et de position peuvent être enregistrées sur un support mémoire non volatile relié de façon amovible à la table à dessiner, par exemple circuit électronique, cassette ou disquette, ce qui évite la nécessité d'une liaison particulière avec un ordinateur éloigné.

## Revendications

1. Dispositif pour la saisie informatique de données graphiques au moment de leur création comportant: une table à dessiner (10) dans laquelle est incorporée une grille (16) formée d'un premier ensemble de conducteurs (17) disposés en lignes et d'un deuxième ensemble de conducteurs (18) disposés en colonnes; au moins un style (30) muni de moyens pour engendrer un champ magnétique et de moyens d'alimentation électrique permettant de faire fonctionner le style de façon autonome; et des circuits (12) de détection et de calcul relié aux conducteurs de la grille pour recevoir les signaux induits dans les conducteurs par le champ magnétique engendré et élaborer une information de position représentative de la position du style par rapport à la table à dessiner, caractérisé en ce que

le ou chaque style (30) comprend: au moins un organe d'écriture et d'effacement (33, 43) pour réaliser de façon sélective des tracés visibles et des effacements desdits tracés visibles sur la table à dessiner (10), des moyens (50, 35, 45) pour engendrer un champ magnétique alternatif ayant une caractéristique particulière correspondant à l'une des fonctions de tracé ou d'effacement pouvant être réalisées au moyen du style, la caractéristique du champ magnétique engendré étant déterminée selon la fonction de tracé ou d'effacement sélectionnée et lesdits moyens pour engendrer un champ magnétique alternatif étant actionnés par lesdits organes d'écriture et d'effacement (33, 43),

les circuits de détection et de calcul (12) comprennent des moyens de discrimination pour distinguer, à partir des signaux recueillis sur les conducteurs de la grille, entre lesdits champs magnétiques différents, de manière à associer à l'information de position une information représentative de la fonction de tracé ou d'effacement sélectionnée.

2. Dispositif selon la revendication 1, caractérisé en ce que les champs magnétiques engendrés ont des fréquences différentes correspondant chacune à l'une des fonctions de tracé ou d'effacement.

3. Dispositif selon la revendication 2, caractérisé en ce que les moyens de traitement sont agencés de manière à détecter l'amplitude maximale des signaux recueillis sur les conducteurs de la grille (16) et à comparer ladite amplitude maximale à des valeurs prédéterminées définissant des plages d'amplitude différentes correspondant chacune à une fréquence particulière du champ magnétique, de manière à délivrer ladite information représentative de la fonction de tracé ou d'effacement sélectionnée.

4. Dispositif selon la revendication 2, caractérisé en ce que le ou chaque style (30) comporte un circuit oscillateur (50) de fréquence ajustable, au moins une bobine d'induction (35, 45) reliée à l'oscillateur, et des moyens (37, 38, 39, 47) de réglage de la fréquence de l'oscillateur pour ajuster celle-ci selon la fonction de tracé ou d'effacement sélectionnée.

5. Dispositif selon la revendication 4, dans lequel les moyens de réglage comprennent au moins un interrupteur (38, 39) actionnable manuellement et porté par le style.

6. Dispositif selon l'une quelconque des revendications précédentes, caractérisé en ce que le ou chaque style (30) comprend au moins un organe d'écriture ou d'effacement (33, 43) rétractable coopérant avec un contactl (37, 47) pour commander la génération d'un champ magnétique par fermeture du contact sous l'effet de la pression de l'organe d'écriture ou d'effacement sur la table à dessiner.

**Patentansprüche**

1. Vorrichtung zum Erfassen graphischer Informationen im Moment ihres Entstehens, umfassend: ein Zeichenbrett (10), in dem Gitter (16) vorgesehen ist, das aus einem ersten Ensemble von Leitern (17), die in Reihen angeordnet sind und einem zweiten Ensemble von Leitern (18), die in Spalten angeordnet sind, besteht; zumindest einen Stift (30), der mit Mitteln ausgerüstet ist, um ein Magnetfeld abzustrahlen und mit elektrischen Versorgungsmitteln, die die Verwendung des Stiftes auf autonome Weise erlauben; und mit Kreisen (12) zum Erfassen und Berechnen der von den Leitern des Gitters erhaltenen Signale, die in den Leitern vom Magnetfeld hervorgerufen werden um eine Information, betreffend die Position des Stiftes bezüglich der Zeichentafel auszuarbeiten, dadurch gekennzeichnet, daß der oder jeder Stift (30) umfaßt: zumindest ein Schreib- und Löschorgan (33, 43), um selektiv sichtbare Striche und Löschungen der sichtbaren Striche auf dem Zeichenbrett (10) durchführen zu können, mit Mitteln (50, 35, 45), um ein Magnetfeld aussenden zu können, das wahlweise ein bestimmtes Kennzeichen aufweist, das den Functionen des Schreibens oder Löschens entspricht und mit Hilfe des Stiftes geschaffen werden kann, wobei das Kennzeichen des abgestrahlten Magnetfeldes von der gewählten Schreib- oder Löschfunktion bestimmt wird und die Mittel zum Aussenden eines alternativen Magnetfeldes durch die Schreib- und Löschorgane (33, 43) betätigt werden, die Detektor - und Berechnungskreise (12) Mittel umfassen, um, ausgehend von den von den Leitern des Gitters erhaltenen Signale, zwischen den unterschiedlichen Magnetfeldern unterscheiden können, auf die Art, daß der Positionsinformation eine Information zugeordnet wird, die kennzeichend für die gewählte Funktionsweise des Schreibens oder Löschens ist.

2. Vorrichtung nach Anspruch 1, dadurch gekennzeichnet, daß die ausgesandten Magnetfelder unterschiedliche Frequenzen haben, wobei jede einer der Funktionen des Schreibens oder Löschens entspricht.

3. Vorrichtung nach Anspruch 2, dadurch gekennzeichnet, daß die Behandlungsmittel so betrieben werden, daß sie die maximale Amplitude der von den Leitern des Gitters (16) erhaltenen Signale feststellen und diese maximale Amplitude mit vorbestimmten Werten vergleichen, die verschiedene Amplitudenbereichen definieren, die jeder einer bestimmten Frequenz des Magnetfeldes entsprechen, auf eine Weise, um die für die Funktion des Schreibens oder Löschens repräsentative Information weiterzuleiten.

4. Vorrichtung nach Anspruch 2, dadurch gekennzeichnet, daß der oder jeder Stift (30) einen Schwingkreis (50) verstellbarer Frequenz umfaßt, weiters zumindest eine Induktionsspule (35, 45), die mit dem Schwingkreis verbunden ist und Regeleinrichtungen (37, 38, 39, 47) für die Oszillatorfrequenz, um diese je nach der gewählten Funktion des Schreibens oder Löschens einstellen zu können.

5. Vorrichtung nach Anspruch 4, wobei die Regelmittel zumindest einen manuell betätigbaren und vom Stift getragenen Unterbrecher (38, 39) umfassen.

6. Vorrichtung nach einem der vorstehenden Ansprüche, dadurch gekennzeichnet, daß der oder jeder Stift (30) zumindest eine zurückziehbares Schreib- oder Löschorgan (33, 43) aufweist, das mit einem Kontakt (37, 47) zusammenwirkt, um die Schaffung eines Magnetfeldes durch Schließen des Kontaktes unter der Wirkung des vom Schreib- oder Löschorgan ausgeübten Drukkes auf das Zeichenbrett zu bewirken.

**Claims**

1. Device for inputting graphic data at the time of their creation comprising: a drawing table (10) incorporating a grid (16) formed by a first assembly of conductors (17) arranged in lines and by a second assembly of conductors (18) arranged in columns; at least one stylus (30) equipped with means for generating a magnetic field and electric supply means enabling the self-operation of the stylus; and detection and computing circuits (12) connected to the conductors of the grid in order to receive the signals induced in said conductors by the generated magnetic field and to work out a position information representing the position of the stylus with respect to the drawing table, characterized in that the or each stylus (30) comprises: at least one writing and erasing member (33, 43) for selectively performing visible plottings and erasings of said visible plottings on the drawing table (10), means (50, 35, 45) for generating an alternating magnetic field having a different predetermined characteristic, corresponding to one of the write or erase functions which can be performed with the stylus, the generated magnetic field characteristic being determined according to the selected write or erase function, and said means for generating an alternating magnetic field being actuated by said write or erase members (33, 43).

the detection and computing circuits (12) comprise discrimination means for differentiating, from the signals received on the conductors of the grid, said various magnetic fields one from the other, so as to combine the data representing the selected write or erase function with the position data.

2. Device according to claim 1, characterized in that the generated magnetic fields have different frequencies, each one corresponding to one of the write or erase functions.

3. Device according to claim 2, characterized in that the processing means are so arranged as to detect the maximum amplitude of the signals received on the conductors of the grid (16) and to compare said maximum amplitude with preset values defining different ranges of amplitude, each one corresponding to a particular frequency of the magnetic field, so as to deliver said data representing the selected write or erase function.

4. Device according to claim 2, characterized in that the or each stylus (30) comprises an oscillator circuit (50) of adjustable frequency, at least one induction coil (35, 45) connected to the oscillator, and means (37, 38, 39, 47) for adjusting the oscillator frequency as a function of the selected write or erase function.

5. Device according to claim 4, in which said adjusting means comprise at least one hand-operable switch (38, 39) provided on the stylus.

6. Device according to any one of the preceding claims, characterized in that the or each stylus (30) comprise at least one retractable write or erase member (33, 43), operationally coupled to a switch (37, 47) controlling the generation of a magnetic field by closure of said switch under the effect of the pressure exerted by the write or erase member on the drawing table.

Fig-1

Fig-2

Fig-3

*12*

*22*

*21*

Lignes

Colonnes

Multiplexeur

Multiplexeur

Amplificateur

Convertisseur A/N — *23*

Micro-ordinateur et mémoires — *25*

Ordinateur
éloigné — *20*

# Fig-4

Enregistrement des
valeurs d'amplitude
des signaux reçus des
ordinateurs lignes
et colonnes.

Détermination de la
position du style
par rapport à la
table.

Détermination de l'amplitude maximale enregistrée.

Comparaison de l'amplitude maximale avec des
limites de plages prédéterminées.

Détermination de la
fonction de tracé ou
d'effacement sélectionnée.

Enregistrement des
informations représentant la position et la
fonction déterminées.

# Fig-5

3